(19) Europäisches Patentamt
European Patent Office
Office européen des brevets

(11) **EP 4 692 913 A1**

(12) **EUROPEAN PATENT APPLICATION**
published in accordance with Art. 153(4) EPC

(43) Date of publication:
**11.02.2026 Bulletin 2026/07**

(21) Application number: 24780270.5

(22) Date of filing: **26.03.2024**

(51) International Patent Classification (IPC):
**G02C 13/00** (2006.01)    **G02C 7/02** (2006.01)
**G02C 7/10** (2006.01)

(52) Cooperative Patent Classification (CPC):
**G02C 7/02; G02C 7/10; G02C 13/00**

(86) International application number:
**PCT/JP2024/011883**

(87) International publication number:
**WO 2024/204157 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 JP 2023049318**

(71) Applicant: **Hoya Lens Thailand Ltd.
Pathumthani 12130 (TH)**

(72) Inventors:
• **IGUCHI Yuki
Tokyo 160-8347 (JP)**
• **MATSUOKA Shohei
Tokyo 160-8347 (JP)**

(74) Representative: **Betten & Resch
Patent- und Rechtsanwälte PartGmbB
Maximiliansplatz 14
80333 München (DE)**

(54) **SPECTACLE LENS SUPPLY SYSTEM, SPECTACLE LENS SUPPLY METHOD, SPECTACLE LENS DESIGN METHOD, SPECTACLE LENS MANUFACTURING METHOD, AND PROGRAM FOR SPECTACLE LENS SUPPLY SYSTEM**

(57)    Provided are a spectacle lens supply system and a related technology thereof including a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships 1 to 3.

[Fig. 3B]

**Description**

Technical Field

The present invention relates to a spectacle lens supply system, a spectacle lens supply method, a spectacle lens design method, a spectacle lens production method, and a program for a spectacle lens supply system.

Background Art

Non Patent Literature 1 discloses the results of studies on symptoms, diseases, and the like caused by abnormalities in lens epithelial cells, such as a secondary cataract. The secondary cataract will be described below.

Treatment for patients after onset of a cataract includes cataract surgery. Generally, a cloudy crystalline lens is removed from the incised lens capsule (phacoemulsification aspiration), and an intraocular lens is inserted into the lens capsule instead. The intraocular lens is covered by the partially incised lens capsule.

After the surgery, complications may occur. As one of the complications, there is a case where, after the surgery, lens epithelial cells and the like remaining in the lens capsule proliferate particularly in the gap between the posterior surface of the intraocular lens (the surface on the intraocular side and in the direction opposite to the side provided with the object in front of the eye) and the lens capsule, so that the lens capsule is clouded (posterior capsule opacification), the clouding progresses, and the translucency into the eye is further reduced to deteriorate the visual function, which is called the secondary cataract. A typical treatment in this case is to remove the opacity using a YAG laser.

In Japan, as many operations for treatment of a secondary cataract as about 30% of cataract surgery cases (lens replacement surgery cases) were performed in around 2020, which is considered to be a problem. In addition, it is considered that the abnormality of the lens epithelial cells is also related to other symptoms and diseases related to the crystalline lens.

Regarding the lens epithelial cells, which contribute to the secondary cataract, Non Patent Literature 1 describes that it is very significant to know the living environment of each individual (hereinbelow, the individual is also referred to as a subject), that is, light having what kind of characteristic is incident on the eyes of the subject, causes changes in the lens epithelial cells, or how the lens epithelial cells change.

Based on the above viewpoint, Non Patent Literature 1 discloses a result of investigation on the influence of the wavelength of light and the irradiance on the lens epithelial cells. According to the result of the investigation, it has been shown that depending on the wavelength of light and the irradiance, a morphological change and irregular morphology can be caused in the lens epithelial cells, and migration of the lens epithelial cells can be decreased.

Fig. 1, which is the result of the investigation in Non Patent Literature 1, is a plot of the relationship between irradiance (vertical axis: unit: $W/m^2$) and a wavelength (horizontal axis: unit: nm) for each light source (full width at half maximum: 10 nm) used in the experiment, in which the mode of the morphological change and the mode of the change in migration of the lens epithelial cells are collectively described. Sunlight is also shown in the plot for reference.

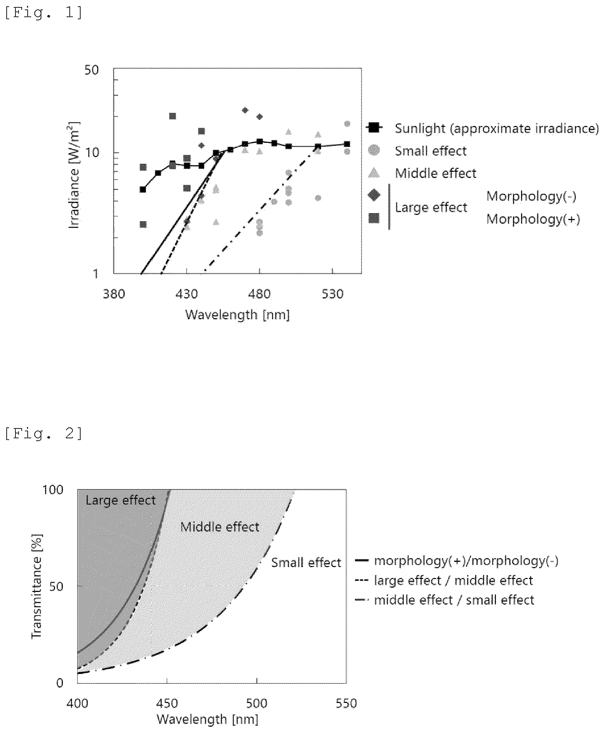

In Non Patent Literature 1, in Fig. 1, the one-dot chain line is set as a boundary between small effect and middle effect, the dotted line is set as a boundary between middle effect and large effect, and the solid line is set as a boundary between presence and absence of cell irregular morphology. It is stated that, from Fig. 1, it has become clear that light with lower irradiance than sunlight tends to reduce the mobility in the range of 400 to 520 nm. In addition, it is described that a filter design considering that there is an exponential dependence is appropriate because the decrease in migration is more remarkable under the conditions of short wavelength and high irradiance.

Fig. 2 is a plot illustrating the shielding characteristics of optical filters that block large effect and middle effect, derived from the boundary lines in Fig. 1, and is a plot of the relationship between a transmittance (vertical axis: unit: %) and a wavelength (horizontal axis: unit: nm).

Citation List

Non Patent Literature

Non Patent Literature 1: "Evaluation of influence of light irradiation in wound healing model for secondary cataract prevention " (Aki Nishida, Masafumi Ootomo, Yuki Tani, and Hiromi Miyoshi) (33rd JSME (The Japan Society of Mechanical Engineers) Conference on Frontiers in Bioengineering (December 17 to 18, 2022) 1C-09)

Summary of Invention

Technical Problem

As a result of intensive studies by the present inventors on Non Patent Literature 1, the following findings have been clarified.

In Figs. 1 and 2 disclosed in Non Patent Literature 1, the range of the irradiance is set on the basis of the approximate irradiance of sunlight (AM 1.5) on the anterior surface of the crystalline lens. The approximate irradiance is calculated on the basis of the spectral irradiance of sunlight (AM 1.5) on the anterior surface of the crystalline lens, with the full width at half maximum of each band pass filter as the wavelength width.

AM is called air mass, and is a ratio of a path of sunlight with respect to sunlight in a case of being perpendicularly incident on the ground, which is set as a reference (AM 1), and AM 1.5 is usually employed in the case of the latitude of Japan.

On the other hand, the radiant intensity (irradiance) of light greatly differs for each region on the earth. For example, simply, the solar irradiance greatly differs for each place of the world as shown in the following website (https://documents1.worldbank.org/curated/en/52943159289304 3403/pdf/Global-Solar-Atlas-2-0-Technical-Report.pdf).

In the United States, for example, the annual average of the solar irradiance in Florida is 1.25 times higher than that in Massachusetts (https://www.nrel.gov/gis/solarresource-maps.html).

Furthermore, in a snowy region, the reflection of short-wavelength light by snow is about 2 to 3 times the reflection of short-wavelength light by soil (https://pdfs.semanticscholar.org/5fa8/86d72e792fdd0c5e8818 e3025b3354db4372.pdf).

Another finding of the present inventors is that the spectral transmittance of the eye of a wearer of a spectacle lens differs for each wearer. For example, in a case where an intraocular lens has already been implanted into the lens capsule of the wearer, it is necessary to reconstruct Fig. 2 described above in consideration of the spectral transmittance of the intraocular lens.

Note that Non Patent Literature 1 also describes the following contents.

- It is reported that, in a case where the pig retinal pigment epithelial cells are irradiated with light at an irradiance of 415 to 455 nm, which is equivalent to that of sunlight, the cell viability decreases.
- The region is consistent with the range of large effect of the action spectrum obtained in this study.
- From this, the wavelength-irradiance band of large effect is considered to have a negative influence on the retinal pigment epithelial cells, and is considered to be a region to be shielded.

On the basis of the above contents, it is newly found that the finding is applicable to cells related to the eye other than the lens epithelial cells (the cells related to the eye are hereinbelow referred to as ocular cells, and specific examples of the ocular cells will be described below).

An object of an embodiment of the present invention is to provide a technique related to supplying a spectacle lens in which phototoxicity to ocular cells is prevented in advance according to an eye of a wearer of the spectacle lens and a region where the spectacle lens is used.

Solution to Problem

A first aspect of the present invention is
a spectacle lens supply system including a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens
(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens

A second aspect of the present invention is
the spectacle lens supply system according to the first aspect, including a display unit that displays a color of a spectacle lens corresponding to each of a plurality of spectral transmittances set from the solar radiant intensity in the region where the spectacle lens is used and the spectral transmittance of the eye of the wearer of the spectacle lens on a basis of the

EP 4 692 913 A1

relationship selected from at least one of the relationships (1) to (3).

A third aspect of the present invention is
the spectacle lens supply system according to the first or second aspect, including an input unit that has a function of receiving an attribute of the wearer of the spectacle lens and lets the wearer of the spectacle lens select a spectacle lens of a favorite color in advance and input a selection content thereof.

A fourth aspect of the present invention is
the spectacle lens supply system according to any one of the first to third aspects, in which the spectral transmittance of the spectacle lens set by the spectral transmittance setting unit satisfies the following formula.

Solar irradiance $\times$ transmittance of eye $\times$ (R1 $\times$ transmittance of spectacle lens fitted in spectacles + 1 - 1 - R3) $\leq$ threshold considering phototoxicity

In the formula, R1 = S/(S + nD^2) is established, S is an area of a box, D is a corneal to vertex distance, and R3 is a shielding ratio of light shielded by a physical feature of the wearer.

A fifth aspect of the present invention is
the spectacle lens supply system according to any one of the first to fourth aspects, including a role-playing content determination unit that lets a material A that reduces a transmittance in a predetermined wavelength range S and a material B that reduces a transmittance in another predetermined wavelength range T play roles to achieve the relationship selected.

A sixth aspect of the present invention is
the spectacle lens supply system according to any one of the first to fifth aspects, in which, on a basis of the relationship selected, the spectral transmittance setting unit sets the spectral transmittance of the spectacle lens that is a spectral transmittance of the spectacle lens set from the solar radiant intensity in the region where the spectacle lens is used and the spectral transmittance of the eye of the wearer of the spectacle lens, and in which a shape of a spectral transmittance curve of the spectral transmittance that has a local maximum value in a range of visible light when a vertical axis represents a spectral transmittance and a horizontal axis represents a wavelength is convex downward at a wavelength at which a spectral transmittance curve of at least any one of members constituting the spectacle lens has the local maximum value.

A seventh aspect of the present invention is
the spectacle lens supply system according to any one of the first to sixth aspects, in which the spectral transmittance setting unit sets the spectral transmittance of the spectacle lens from an attribute of the wearer of the spectacle lens as well as the solar radiant intensity in the region where the spectacle lens is used and the spectral transmittance of the eye of the wearer of the spectacle lens.

An eighth aspect of the present invention is
the spectacle lens supply system according to any one of the first to seventh aspects, in which the spectral transmittance setting unit sets the spectral transmittance of the spectacle lens on a basis of the relationships 1 to 3.

Each of the above-described aspects can be combined with each of the following aspects.

A ninth aspect of the present invention is
a spectacle lens supply method including a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens
(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens

A tenth aspect of the present invention is
a spectacle lens design method including a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens

An eleventh aspect of the present invention is a spectacle lens production method including

a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens, and

a producing process of producing the spectacle lens so as to have the transmittance set in the spectral transmittance setting process.

A twelfth aspect of the present invention is
a program for a spectacle lens supply system causing a computer to function as a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens

Advantageous Effects of Invention

According to an embodiment of the present invention, it is possible to provide a technique related to supplying a spectacle lens in which phototoxicity to ocular cells is prevented in advance according to a region where the spectacle lens is used.

Brief Description of Drawings

[Fig. 1] Fig. 1 is a plot of the relationship between an irradiance (vertical axis: unit: W/m$^2$) and a wavelength (horizontal axis: unit: nm) for each light source (full width at half maximum: 10 nm) used in an experiment at a position irradiated with light, in which the mode of the morphological change and the mode of the change in migration of lens epithelial cells are collectively described. Sunlight is also shown in the plot for reference.

[Fig. 2] Fig. 2 is a plot illustrating the shielding characteristics of optical filters that block large effect and middle effect, derived from the boundary lines in Fig. 1, and is a plot of the relationship between a transmittance (vertical axis: unit: %) and a wavelength (horizontal axis: unit: nm).

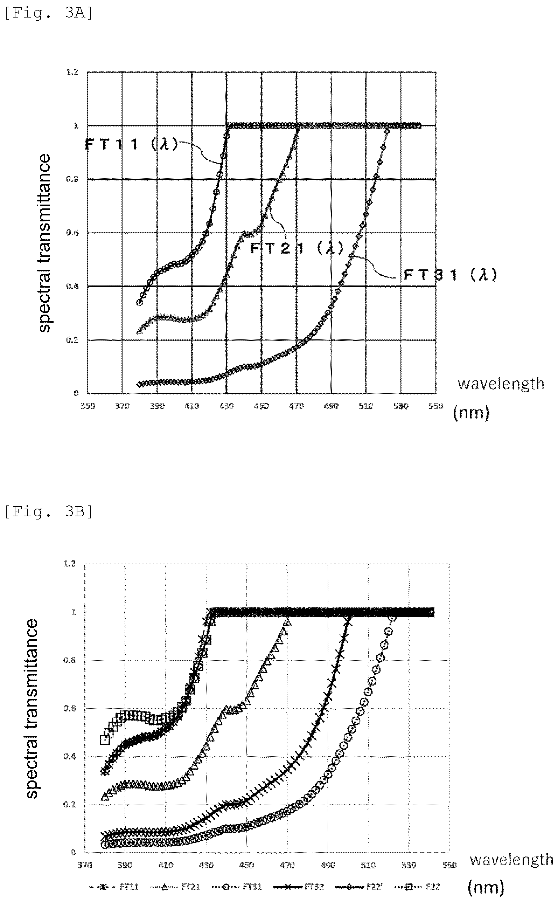

[Fig. 3A] Fig. 3A is a plot of FT11 (A) (left side), FT21 (A) (center), and FT31 (A) (right side) in the relationship between a transmittance (vertical axis, unit: %) and a wavelength (horizontal axis, unit: nm).

[Fig. 3B] Fig. 3B is a plot of FT11 (A), FT21 (A), FT31 (A), FT32 (A), FT22' (A), and FT21 (A) in the relationship between a transmittance (vertical axis, unit: %) and a wavelength (horizontal axis, unit: nm).

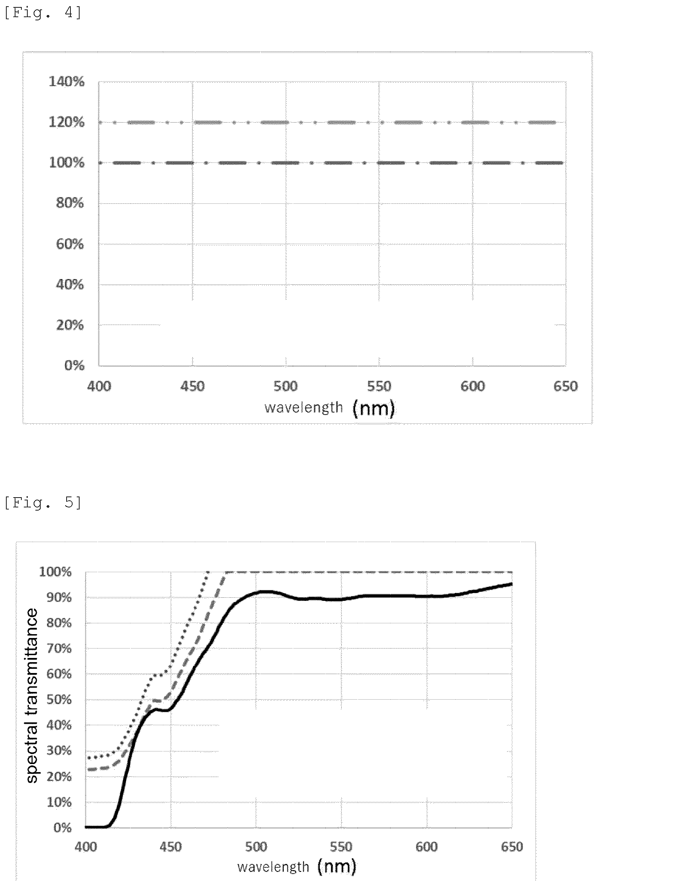

[Fig. 4] Fig. 4 is a plot in which a horizontal axis represents a wavelength (unit: nm) and a vertical axis represents "a relative value of user individual data with respect to a reference value" in Case 1, and as individual data, is a plot in which a relative illuminance in a user environment with respect to a reference solar irradiance is represented by a two-dot chain line and a relative transmittance of an intraocular lens implanted eye with respect to a spectral transmittance of a standard eye for a wearer J is represented by a one-dot chain line.

[Fig. 5] Fig. 5 is a plot in which a vertical axis represents a spectral transmittance (unit:%) and a horizontal axis represents a wavelength (unit: nm) in Case 1, where the dotted line indicates an upper limit of the spectral transmittance suitable for the wearer J under a reference condition (AM 1.5), the broken line indicates an upper limit of the spectral transmittance suitable for the wearer J in the region where the spectacle lens is used, and the solid line indicates a spectral transmittance of the spectacle lens.

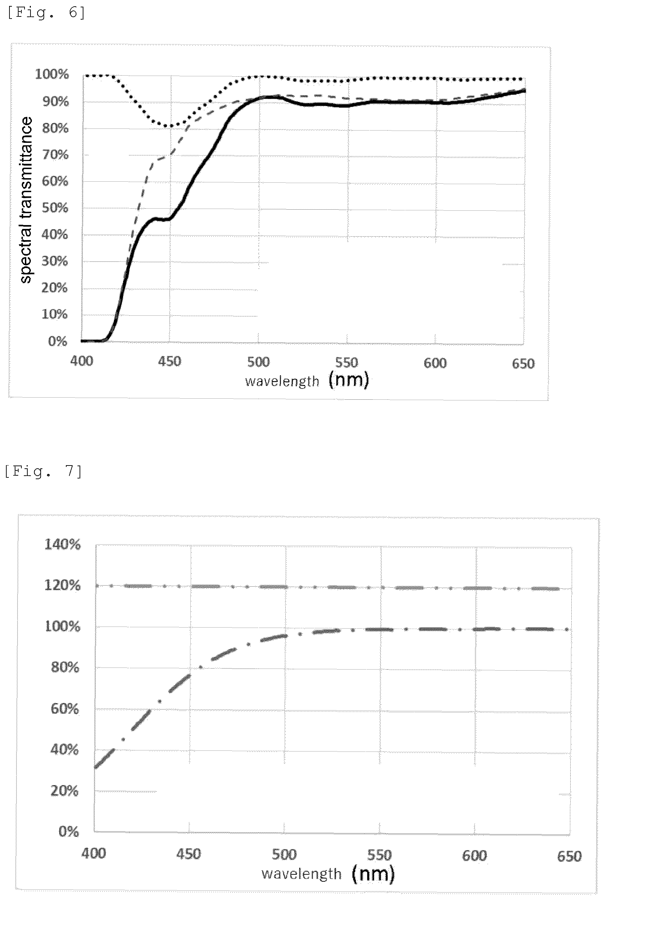

[Fig. 6] Fig. 6 is a plot in which a vertical axis represents a spectral transmittance (unit:%) and a horizontal axis represents a wavelength (unit: nm) in Case 1, where the broken line indicates a spectral transmittance of the lens substrate, the dotted line indicates a spectral transmittance of the functional film, and the solid line indicates a spectral transmittance of the spectacle lens.

[Fig. 7] Fig. 7 is a plot in which a horizontal axis represents a wavelength (unit: nm) and a vertical axis represents "a relative value of user individual data with respect to a reference value" in Case 2, and as individual data, is a plot in which a relative illuminance in a user environment with respect to a reference solar irradiance is represented by a two-dot chain line and a relative transmittance of an intraocular lens implanted eye with respect to a spectral transmittance of a standard eye for a wearer K is represented by a one-dot chain line.

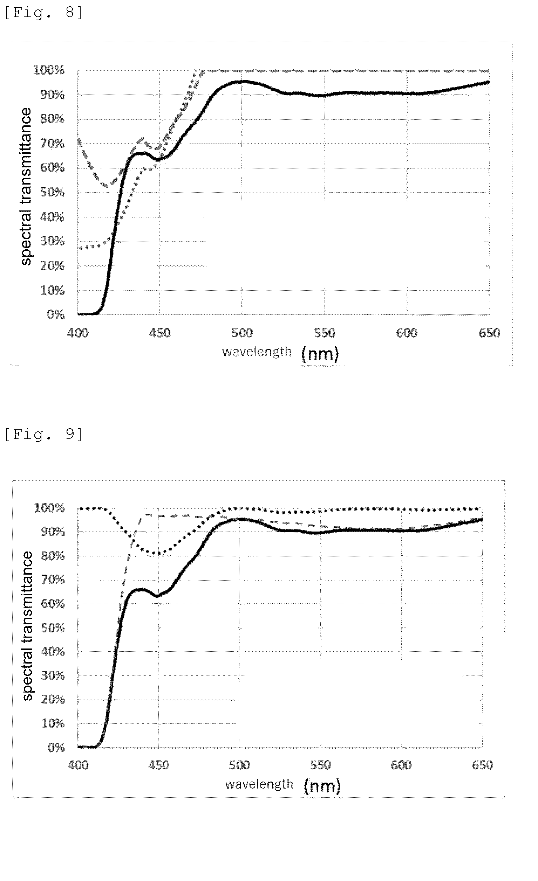

[Fig. 8] Fig. 8 is a plot in which a vertical axis represents a spectral transmittance (unit:%) and a horizontal axis represents a wavelength (unit: nm) in Case 2, where the dotted line indicates an upper limit of the spectral transmittance suitable for the wearer K under a reference condition (AM 1.5), the broken line indicates an upper limit of the spectral transmittance suitable for the wearer K in the region where the spectacle lens is used, and the solid line indicates a spectral transmittance of the spectacle lens.

[Fig. 9] Fig. 9 is a plot in which a vertical axis represents a spectral transmittance (unit:%) and a horizontal axis represents a wavelength (unit: nm) in Case 2, where the broken line indicates a spectral transmittance of the lens substrate, the dotted line indicates a spectral transmittance of the functional film, and the solid line indicates a spectral transmittance of the spectacle lens.

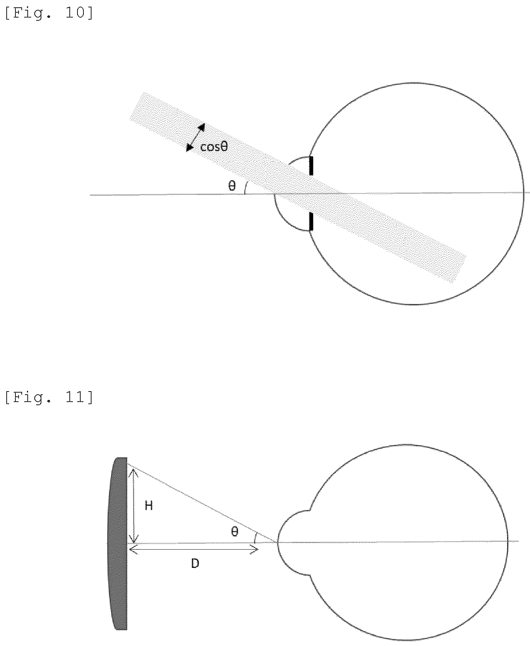

[Fig. 10] Fig. 10 is a schematic view illustrating a state in which when an angle with respect to a direction of light vertically incident on the pupil (a horizontal direction in a case where the wearer turns the eye in the horizontal direction) is θ, an incident radiation flux (spread) of light is proportional to cosθ.

[Fig. 11] Fig. 11 is a schematic view when the radius of the spectacle lens fitted into the spectacles in a planar view (such a spectacle lens is also referred to as a box) is H, and the corneal to vertex distance to the box is **D.**

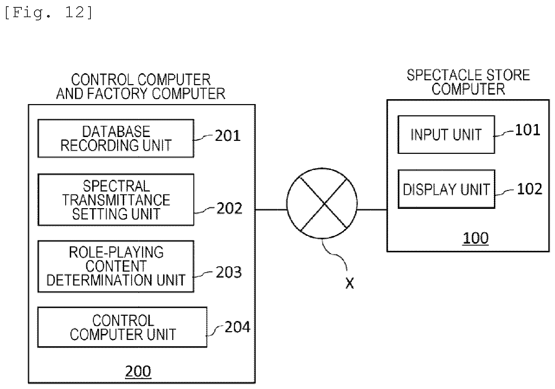

[Fig. 12] Fig. 12 is a schematic block diagram of a configuration of a spectacle lens supply system according to an aspect of the present invention.

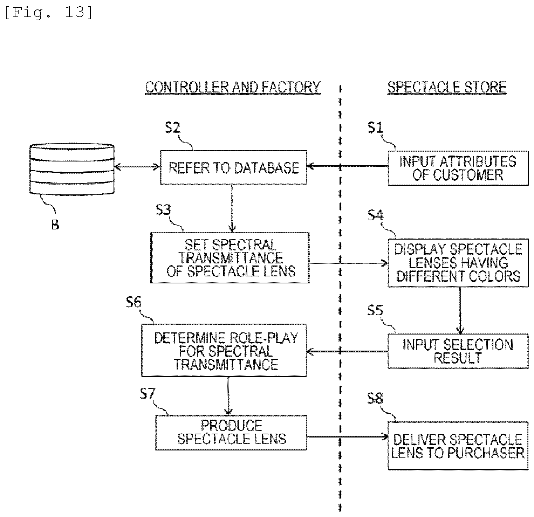

[Fig. 13] Fig. 13 is a schematic procedure diagram of the spectacle lens supply system according to the aspect of the present invention.

Description of Embodiments

Hereinbelow, an aspect of the present invention will be described. In the present specification, "to" refers to a predetermined value or more and a predetermined value or less. For contents not described below, the contents of Non Patent Literature 1 can be fully incorporated. For the amount of irradiation when receiving light (when there is an object irradiated with light), the expression "irradiance" is used, and for the amount of irradiation in the other cases, the expression "radiant intensity" is used.

An "object side surface" of a spectacle lens is a surface located on an object side when spectacles including the spectacle lens are worn by a wearer, and an "eyeball side surface" is the opposite surface thereto, that is, a surface located on an eyeball side when spectacles including the spectacle lens are worn by a wearer. This relationship also applies to a lens substrate, which is a base of the spectacle lens. That is, the lens substrate also has an object side surface and an eyeball side surface.

A "spectral transmittance" in the present specification refers to a spectral transmittance in a case where light is perpendicularly incident from an object side surface on the object side surface at or near the lens center of the spectacle lens. Note that, in a case where the thickness of the peripheral edge portion of the spectacle lens is small, the spectral transmittance at the peripheral edge portion is also managed as described below in an aspect of the present invention, similarly to the case of the lens center, whereby the risk of phototoxicity can further be prevented.

A "transmittance" varies depending on the position of the spectacles and the angle of incidence on the spectacles, but it is safe to manage the value in the case of perpendicular incidence on the eye point, where the transmittance is possibly the highest.

An "eye point" is a position through which a line of sight passes when the spectacle lens is worn and when the wearer faces to a predetermined position (for example, straight front). In the case of a progressive addition lens having power for distance to power for near, a distance eye point defined for each lens may be used. In the case of an intermediate-near lens described below, the eye point may be a position through which a line of sight passes when the wearer faces an object at an intermediate distance (1 m to 40 cm).

In a case where the transmittance when light passes through a position other than the eye point becomes high or the irradiance after transmission becomes high (for example, a case where the sun is at a high position), the transmittance at the point may be managed.

In addition, the transmittance may be reduced in a region that does not contribute to incidence of sunlight to the eye, such as a lower part of the lens. Effects such as facilitation of reading by looking down and improvement in appearance by gradation can be expected.

A spectacle lens according to an aspect of the present invention may be a single focus lens or a progressive addition lens. In a case where the spectacle lens is a progressive addition lens, the progressive addition lens may be an intermediate-near lens corresponding to an object distance of an intermediate distance (1 m to 40 cm) to a near distance (40 cm to 10 cm), a near-near lens corresponding to an object distance within the near distance, or a distance-near lens corresponding to a far distance (for example, 2 m to infinite distance) and the near distance.

<Principle of Setting Spectral Transmittance of Spectacle Lens>

A spectacle lens supply system according to an aspect of the present invention has the following configuration.

"A spectacle lens supply system comprising a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens
(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens"

The relationship 1 between a wavelength of light and an irradiance for determining whether or not to cause a morphological change of ocular cells (hereinbelow, lens epithelial cells are used as examples) of the wearer of the spectacle lens may be Plot 1 (each of solid lines in Figs. 1 and 2) for determining whether or not to cause a morphological change of ocular cells in a relationship between a wavelength of light and an irradiance.

The relationship 2 between a wavelength of light and an irradiance for determining whether or not to cause a change in migration of ocular cells of the wearer of the spectacle lens may be Plot 2 for determining whether or not to cause a change in migration of ocular cells (for example, a decrease in migration) in a relationship between a wavelength of light and an irradiance.

One in Plot 2 (indicated as "Plot 2") is each of the dotted lines in Figs. 1 and 2, and is a line that determines whether the decrease rate of the migration speed is more than 75% (left side of the line) or less than 75% (right side of the line). The other in Plot 2 (indicated as "Plot 3") is each of the one-dot chain lines in Figs. 1 and 2, and is a line that determines whether the decrease rate of the migration speed is more than 35% (left side of the line) or less than 35% (right side of the line).

The relationship 3 between a wavelength of light and an irradiance for determining whether or not to cause a change in invasiveness of ocular cells of the wearer of the spectacle lens may be Plot 3 for determining whether or not to cause a change in invasiveness of ocular cells (for example, an increase of invasiveness) in a relationship between a wavelength of light and an irradiance. Considering that invasion of lens epithelial cells raises the possibility of onset of a secondary cataract, a change in invasiveness is defined as the relationship 3 in an aspect of the present invention similarly to the relationships 1 and 2.

The relationships 1, 2, and 3 do not need to be embodied in the form of plots, and may be obtained as data.

As "a solar irradiance in a region where a spectacle lens is used", an annual average horizontal solar irradiance in a region where a spectacle lens is used may be employed. In Japan, instead of the annual average horizontal solar irradiance, a global solar radiation amount (monthly average, annual average, or the like) provided by the Meteorological Agency may be employed. A "solar irradiance" is the amount of radiant energy (irradiance) that a unit area receives from the sun in a unit time, and the unit is often kilowatts per square meter ($kW/m^2$) or watts per square meter ($W/m^2$). In particular, solar irradiation from all directions of the sky is referred to as global solar radiation, and global solar radiation energy per unit area received on a horizontal plane is referred to as the global solar radiation amount. Solar radiation is irradiation in a wavelength range of 0.29 to 3 $\mu$m that accounts for about 97% of all energy in solar irradiation originating from the sun having a high surface temperature of about 6000 K.

"A spectral transmittance of an eye of a wearer of a spectacle lens" means a spectral transmittance of the entire eye including an intraocular lens in a case where the wearer uses the intraocular lens. A "spectral transmittance" in the present specification refers to a spectrum (or a plot) when a vertical axis represents a transmittance (unit: %) and a horizontal axis represents a wavelength (unit: nm). The spectral transmittance is also referred to as a spectral transmission.

In a case where the wearer does not use the intraocular lens, the spectral transmittance means a spectral transmittance of the eye. The spectral transmittance of the eye may be obtained by measurement for each wearer, or typical spectral transmittances according to age, race, and the like may be prepared in advance, and a spectral transmittance may be selected according to the attribute of the wearer. In the case of an intraocular lens wearer, an estimation value based on a catalog value of the intraocular lens may be used.

An example of setting a spectral transmittance of a spectacle lens from a solar radiant intensity in a region where the spectacle lens is used and a spectral transmittance of an eye of a wearer of the spectacle lens on a basis of a relationship selected from at least one of the relationships 1, 2, and 3 described above will be described below. For convenience of explanation, in the following example, a secondary cataract is assumed as an element that inhibits health, and a case where ocular cells are lens epithelial cells is assumed.

A database related to the following relationships disclosed in Non Patent Literature 1 is used.

- A relationship 1 between a threshold of an irradiance and a wavelength causing a morphological change of lens epithelial cells (ACTI1 (λ))
- A relationship 2 between a threshold of an irradiance and a wavelength causing a change in migration of lens epithelial cells (ACTI2 (λ) and ACTI3 (λ))

ACTI2 means a slight decrease in migration (degrease ratio of 30% or more and less than 70%), and ACTI3 means a significant decrease in migration (decrease ratio of 70% or more).

Note that a database related to a relationship 3 between a threshold of an irradiance and a wavelength causing a change in invasiveness of lens epithelial cells may be used, but the description thereof will be omitted below.

The morphological change of lens epithelial cells can be a major factor that induces a secondary cataract. Therefore, as for the relationship 1, it is preferable to select a relationship that does not cause the morphological change of lens epithelial cells (right side of Plot 1).

A spectral transmittance FTx that is a spectral transmittance not to exceed each threshold and is required for a spectacle lens is expressed as follows in the case of using a spectral irradiance ATOM of the sun or the like. In the following formula, x corresponds to any of the numbers 1 to 3 in ACTI1 to 3.

$$\text{FTx } (\lambda) \times \text{ATOM } (\lambda) \times \text{P } (\lambda) \leq \text{ACTIx } (\lambda) \quad \cdots \quad \text{(Formula 1)}$$

P (λ) is a coefficient indicating the degree of attenuation of a radiant intensity (irradiance) of light incident on an eye due to a physiological characteristic. P (λ) may be a coefficient corresponding to the area (unit: $mm^2$) of the pupil diameter. In that case, since the pupil also changes depending on the wavelength of the incident light, a wavelength λ is used as a variable.

As P (λ), other known data may be used. In a case where different physiological characteristics among individuals are considered, a certain characteristic criterion may be determined, a coefficient under the condition, a reference P (λ), may be determined from human body measurement data, the characteristic of an individual may be measured as a relative value from the reference, and the relative value may be multiplied by the reference P (λ) to determine P (λ) of the individual.

Note that P (λ) may be a function related to the pupil diameter and the spectral transmittance of the iris. This function may be referred to as a "pupil diameter function" in the present specification. Note that P (λ) may be a number in the range from 0 to 1. The pupil diameter generally changes due to factors described in the following website (https://acuvuevision.jp/eyelife/vol18), and also changes due to the spectrum shape.

ATOM (λ) is a spectral irradiance (converted value) characteristic of the environment, and is an irradiance (converted value) at each wavelength. Here, ACTI (λ) is a transmission spectrum when cell characteristics are changed due to phototoxicity, and corresponds to the solid line, the dotted line, and the one-dot chain line in Figs. 1 and 2.

In a case where an equal sign is established in the above Formula 1, FTx (A) is the maximum value. The maximum spectral transmittance is preferable for a spectacle lens wearer because the outside world looks bright. On the other hand, a case where an unequal sign is established in the above Equation 1 should also be allowed. It is meaningful to have a margin due to factors that influence the phototoxicity to the wearer's eye, such as a spectral irradiance of light and irradiation time, and other requirements required as a filter.

Therefore, an adjustment coefficient B (A) may be adopted for the above Formula 1, and Formula 2 shown below may be used.

$$\text{FTx } (\lambda) \times \text{ATOM } (\lambda) \times \text{P } (\lambda) = \text{ACTIx } (\lambda) \times \text{B } (\lambda) \cdots$$

$$(\text{Formula 2})$$

B (A) is used when adjustment is necessary due to the above-described factors and/or the above-described requirements. As a specific value, a value in the range from 0 to 1 may be determined according to the degree of the above-described factors and/or the above-described requirements. B may be a value for each wavelength or may be a simple constant. For example, a person having a tendency toward eyelid ptosis has a low risk because light is cut not only by the length of the pupil diameter, and tends to be difficult to see. Therefore, the value is multiplied by 0.7 according to the degree of ptosis.

Note that an aspect of the present invention can be carried out even in a case where ACTI1 to 3 do not exist in the database. For example, in a case where a spectral transmittance upper limit FTx (A) ' exists in the database, a reference irradiance ATOM' (A) and a reference pupil diameter P' (A) may be employed instead of ATOM (A). The reference irradiance ATOM' (A) means, for example, a magnification ratio in a use region of the spectacle lens with respect to the reference solar irradiance in the region of AM 1.5 (for example, Tokyo). The reference pupil diameter P' (A) means, for example, a magnification ratio in a use region of the spectacle lens with respect to the reference pupil diameter P0 (A) in the region of AM 1.5 (for example, Tokyo). In that case, the following formula may be used.

FTx (A) ≤ {FTx (λ)' × ATOM (A)' × P (A)'}/{ATOM (A) × P (λ)} ⋯ (Formula 3)     (Formula 3)

Formula 3 is modified as follows.

FTx (A) ≤ [FTx (λ)'/{ATOM (λ)/ATOM (λ)'}]/{P (λ)/P (A)'} ⋯ (Formula 4)     (Formula 4)

The first curly brackets on the right side of Formula 4 correspond to ACTIx/ATOM.

A database related to the following relationships disclosed in Non Patent Literature 1 is prepared.

- ACTI1 causing relatively severe phototoxicity in a 24-to-30-hour continuous light irradiation experiment (the term "phototoxicity" as used herein refers to a situation in which abnormal changes in cell morphology occur in 20% or more of all cells)
- ACTI2 showing a change in cell migration (clear decrease in migration speed), the degree of which is a decrease to a rate of about 30 to 70%
- ATCTI3 having strong phototoxicity to migration and decreasing the rate to 30% or less

By utilizing this database and adopting the above formula 1 or 2, ACTI1 (Plot 1 described above), ACTI2 (Plot 2 described above), and ACTI3 (Plot 3 described above) are obtained, thereby obtaining a spectral transmission of a spectacle lens with respect to environment light (ATOM1 (A)) in the region where the spectacle lens is used. These are referred to as FT11 (A), FT21 (A), and FT31 (A).

For ATOM1 (A), in order to make a comparison of the irradiance, the irradiance at each wavelength when the sunlight of AM 1.5 is incident on the eye and reaches the front of the crystalline lens is converted into a value for each point as light having a full width at half maximum of 10 nm. ACTx (A) is a value when light having a full width at half maximum of 10 nm is used for each center wavelength.

In order to take into account characteristics of living environment light in a region where the spectacle lens is used, the following aspect may be adopted. As the transmission of the spectacle lens provided according to an aspect of the present invention, first, environment light having the highest intensity may be assumed, and a transmission characteristic having the lowest transmittance (the characteristic is also referred to as a filter characteristic) may be calculated. Thereafter, if there is a difference in the intensity of environment light, r (λ) = ATOM1 (λ)/ATOMy (A), which is a ratio of a spectral irradiance 1 (ATOM1) of a reference environment to a spectral irradiance y (ATOMy) of a living environment in a region where the spectacle lens is used, is multiplied to obtain a necessary filter characteristic. Considering the irradiation time with respect to the ratio r (A), the adjustment coefficient B1 (A) as described above is obtained.

Among FT11 (A), FT21 (A), and FT31 (A), FT31 (A) represents a filter characteristic with the lowest transmittance. The light transmitted through the spectacle lens having the filter characteristic of FT31 (A) does not change the migration of the lens epithelial cells, and is the safest for the cells of the eye.

On the other hand, it is difficult to visually recognize an object, which is a basic function of the eye, and it is difficult to recognize the color of the object. The visual recognition of the object is also referred to as "object identification", and the recognition of the color of the object is also referred to as "color discrimination".

In addition, when the intensity of environment light is low, the light is excessively filtered, and it becomes more difficult to perform object identification and color discrimination.

On the other hand, it is also conceivable to multiply FT31 (A) by r (A) described above to reduce the filter characteristic in consideration of the environment light level. In this case, it is easy to perform identification and color discrimination. However, in a case where the environment light does not fall within an assumed level, safety for the cells is lowered.

Therefore, it is preferable to determine a final filter characteristic in consideration of the irradiance of light in the eye environment and the time of exposure to the light. Note that it is not necessary to make the transmittance lower than FT31 (A), and it is not desirable to make the transmittance lower than FT31 (A) from the viewpoint of identification. Therefore, FT31 (A) may be set as the lower limit value of the transmittance.

Among FT11 (A), FT21 (A), and FT31 ($\lambda$), FT21 (A) is a filter characteristic intended to prevent the migration of lens epithelial cells from being impaired and abnormalities from occurring.

When the transmittance is lower than the filter characteristic of FT21 (A), the decrease in migration speed, which is an index of the change in migration, is as small as 30% or less. Even under light having lower intensity than that of sunlight, the decrease ratio is as small as the similar reduction ratio or less. In reality, since many people do not spend so long time under direct sunlight, the influence on migration is considered to be even less, and when considering crystalline lens cells, FT 21 (A) is a practically useful characteristic for many people from the viewpoint of identification and color discrimination.

Among FT11 (A), FT21 (A), and FT31 ($\lambda$), FT11 (A) is a filter characteristic for achieving the purpose of preventing irregular morphology of lens epithelial cells. Among the three types of filter characteristics, FT11 ($\lambda$) has the highest transmittance. Therefore, when the FT11 (A) is adopted, it is easy to perform object identification and color discrimination, which are basic functions of the eye. On the other hand, exposure to high intensity environment light can have a negative influence on the eye cells. However, at a time when the environment light is weak when the spectacle lens is used, the influence on the migration can be within a limited range even in the filter characteristic of FT11 (A)

On the other hand, it is also conceivable to multiply FT11 (A) by r (A) described above to enhance the filter characteristic in consideration of the environment light level. In this case, safety for the cells is increased. However, when the environment light level is low, it is difficult to perform identification and color discrimination.

Therefore, it is preferable to determine a final filter characteristic in consideration of the irradiance of light in the eye environment and the time of exposure to the light. Note that, in a case where there is no problem in object identification, color discrimination, or the like, it is not necessary to make the transmittance higher than FT11 (A), and it is not desirable to make the transmittance higher than FT11 (A) from the viewpoint of an influence on the cells. Therefore, FT11 (A) may be set as the upper limit value of the transmittance.

Fig. 3A is a plot of FT11 (A) (left side, symbol: circle), FT21 (A) (center, symbol: triangle), and FT31 ($\lambda$) (right side, symbol: rhombus) in the relationship between a transmittance (vertical axis, unit: %) and a wavelength (horizontal axis, unit: nm).

A practically effective range of the transmittance of the filter is considered to be a value between FT31 ($\lambda$) and FT11 (A) set as boundaries with reference to the value of FT21 (A).

More specifically, the boundary on the side where the transmittance is low is FT32 (A), which has twice as high a transmittance as that of FT31 (A) as a whole. In the life of the wearer of the spectacle lens, since the irradiation amount decreases due to contraction of the pupil under sunlight, it is assumed that the irradiance is halved on average to consider the influence on the migration.

In addition, to obtain the boundary on the side where the transmittance is high, FT11 (A) and FT22 (A), which has twice as high a transmittance as that of FT21 (A), are compared at each wavelength, and either one having the lower transmittance is selected as FT22' (A).

Fig. 3B is a plot of FT11 (A), FT21 (A), FT31 ($\lambda$), FT32 (A), FT22' (A), and FT21 (A) in the relationship between a transmittance (vertical axis, unit: %) and a wavelength (horizontal axis, unit: nm).

In consideration of the obtained effect (prevention of expression of phototoxicity) and the manufacturing cost of the filter, it is realistic and preferable to provide a spectacle lens having a filter characteristic of a transmittance between FT22' (A) and FT32 (A) in Fig. 3B.

Note that, since the cells exposed to direct sunlight in the pupil cannot migrate, the idea of averaging the irradiation amount in FT11 (A) is not used in an aspect of the present invention.

First, a condition of the filter characteristic for providing a good field of view for a wearer of the spectacle lens while minimizing the influence on cells is to satisfy the practically effective range of the transmittance of the filter. In addition, the following conditions are given.

That is, the range of a spectral irradiance IRRA ($\lambda$) on the lens surface is minimum between the wavelength integrals of the visible light of IRRA1 (A) and -IRRA2 (A), and the wavelength integral of the spectral irradiance IRRA (A) and a standard spectral luminous efficiency V ($\lambda$) (photopic vision) is maximum. Regarding this content, JIS Z 8785:2019 [ISO 23539:2005 (CIE S 010:2004) Photometry -The CIE system of physical photometry] can be referred to.

With the sunlight of AM 1.5 as a reference, the following formulae are obtained.

$$\text{IRRA1 } (\lambda) = \text{ATOM1} \times \text{FT } (\lambda) \; 22' \;\; \cdots \;\; \text{(Formula 5)}$$

$$\text{IRRA2 } (\lambda) = \text{ATOM1} \times \text{FT } (\lambda) \; 32 \;\; \cdots \;\; \text{(Formula 6)}$$

The range of IRRA (A) in which the integral value of IRRA (A) $\times$ V (A) is maximum and the integral value of IRRA (A) is minimum in the visible light region (390 nm to 720 nm) may be adopted for the spectacle lens.

<Specific Configuration of Spectacle Lens for Achieving Principle>

There is no limitation on a specific means for achieving the spectacle lens having the spectral transmittance illustrated in Figs. 3A and 3B.

For example, the filter characteristic may be achieved by mixing a colorant in a lens substrate serving as a main body of the spectacle lens. A plurality of types of colorants may be mixed in the lens substrate. As expression of the plurality of types of colorants, it is possible to use expression of a material A that reduces the transmittance in a predetermined wavelength range S and a material B that reduces the transmittance in another predetermined wavelength range T.

The composition of the lens substrate is not limited, and may be a resin or glass. The resin may be a thermosetting resin, a photocurable resin, or other resins.

In addition, the spectral transmittance of the spectacle lens may be achieved by a functional film provided on each main surface on the object side and the eyeball side of the lens substrate. The functional film may include a primer film provided immediately on the lens substrate, a hard coat film provided thereon, an antireflection film, an antifouling film, and the like. As expression of this functional film, it is possible to use expression of a material A that reduces the transmittance in a predetermined wavelength range S and a material B that reduces the transmittance in another predetermined wavelength range T.

In addition, a photochromic material may be used for at least one of the lens substrate and the functional film. Due to the function of the photochromic material, the amount of sunlight incident on the eye of the wearer of the spectacle lens can be made substantially constant regardless of whether the solar radiant intensity (sunlight) fluctuates between high and low values.

In addition, the lens substrate and the functional film may play respective roles to achieve the spectral transmittance of the spectacle lens. At this time, the lens substrate corresponds to the material A, and the functional film corresponds to the material B. This configuration is preferable in the following points. Details will be described below.

The degree of a morphological change and the degree of migration of lens epithelial cells are set. In addition, the spectral transmittance required for the spectacle lens is set according to at least one of a use region of the spectacle lens, a use environment of the spectacle lens, and a situation of the eye of the wearer of the spectacle lens (example: whether or not the intraocular lens is present, and the color thereof if present) (preferably, the situation of the eye and the use region of the spectacle lens and/or the use environment of the spectacle lens). The use region of the spectacle lens and the use environment of the spectacle lens are also described in the following (Specific Example and Preferred Example of Spectacle Lens Supply System).

In order to set the spectral transmittance required for the spectacle lens, it is preferable to construct a mechanism capable of easily customizing the spectral transmittance required for the spectacle lens. The spectral transmittance can be customized easily by the lens substrate or the functional film.

For example, while the functional film of the spectacle lens provided to each wearer is common, the spectral transmittance of the spectacle lens required for each wearer may be customized by the lens substrate, and the lens pair (substrate) may be immersed in a dye to perform pot dyeing (normal dyeing). By preparing various lens substrates in this manner, a process for forming the functional film can be performed simultaneously on the various lens substrates, and the work efficiency is good.

Conversely, while the lens substrate of the spectacle lens provided to each wearer is common, the spectral transmittance of the spectacle lens required for each wearer may be customized by the functional film. More specifically, in a case where the functional film is a hard coat film, a predetermined dye may be mixed in the raw material liquid of the hard coat film, and the hard coat film may be attached to the lens substrate to achieve the spectral transmittance of the spectacle lens, or the lens pair to which the hard coat film is attached may be immersed in a dye to perform pot dyeing on the hard coat of the lens with the hard coat film (dyeable hard coat).

In a case where the functional film is an antireflection film, the spectral transmittance of the spectacle lens may be achieved by the composition of a raw material of the antireflection film and a multilayer structure thereof (stack of a low reflection film and a high reflection film), and the lens substrate.

Alternatively, the functional film may be a film having a dynamic transmission such as a photochromic film or an electronic photochromic film instead of a film having a static transmission represented by the antireflection film or a band pass film. Both may be lined up, and the former may be recommended to a user who wears glasses during the day and outdoors, and the latter may be recommended to a user who uses glasses during the night and indoors as well. In a case where a photochromic film is selected from a plurality of photochromic films, the photochromic film may be selected in consideration of the transmittance, the color development, the response time, and the like.

In general, in film formation of a functional film, film formation is simultaneously performed on a large number of lens substrates in terms of the work efficiency. On the other hand, in an aspect of the present invention, each lens substrate (or each lens substrate on which at least a part of the functional film is formed) is dyed with a dye determined according to the spectral transmittance to customize the spectral transmittance of the spectacle lens required for each wearer. This is different work content from conventional film formation of a functional film.

Customizing the spectral transmittance by the dyeing has the following advantages.

First, when the degree of a morphological change and the degree of migration of lens epithelial cells are set, it is advisable to at least provide a filter characteristic (FT31 (A)) in which the lens epithelial cells do not undergo a morphological change as illustrated in Figs. 1 and 2. To this end, light having a wavelength to be shielded by any spectacle lens provided according to an aspect of the present invention is shielded by the hard coat film, the antireflection film, or the like.

In addition, each lens substrate (or each lens substrate on which at least a part of the functional film is formed) may be dyed so that the spectral transmittance becomes sufficiently high while a filter characteristic (between FT31 (A) and FT11 (A)) that achieves the degree of decrease in migration of lens epithelial cells is satisfied.

For example, each lens substrate (or each lens substrate on which at least a part of the functional film is formed) may be provided with a characteristic in which the spectral transmittance becomes sufficiently high at (one of) the wavelength(s) that is the local maximum value in the transmission spectrum that achieves FT21 (A) of Fig. 3A (example: the local maximum value around 440 nm). Conversely, dyeing may be performed so as to have the absorption spectrum that avoids at least one of the wavelengths.

As another role-playing pattern, the filter characteristic that achieves the degree of the morphological change and the degree of the migration of the lens epithelial cells (degrees 1 and 2) may be satisfied by the lens substrate, and the filter characteristic that achieves the degree of the invasiveness of the lens epithelial cells (degree 3) may be satisfied by the functional film or by dyeing on the lens substrate or the functional film.

For example, a morphological change occurs only with high intensity light. Similarly, a large change in migration occurs only with high intensity light. On the other hand, a change in invasiveness and a small change in migration may occur even if the light is not high in intensity. In view of this, in order to keep the risk to a minimum, a large change in morphology and migration may be dealt with by forming the functional film, and a change in invasiveness and a small change in migration may be dealt with by dyeing, which only requires a small lot and can take flexible measures.

In a case where the dyeing is performed, all that is required is to perform a process of dyeing each lens substrate (or each lens substrate on which at least a part of the functional film is formed) some time during a process of mass-producing a large number of spectacle lenses. As a result, the spectral transmittance can be customized at low cost, and the work efficiency is also increased.

Instead of this dyeing, a photochromic material may be used. For example, the absorption spectrum may be set so as to avoid at least one of the wavelengths at which the transmission spectrum is a local maximum value.

At the wavelength at which the spectral transmittance of the spectacle lens becomes a local maximum value, the spectral transmittance of the dyeing material or the functional film may be a local minimum value or the shape of the spectral transmittance curve may be convex downward. Accordingly, under a condition that the shielding effect by the corresponding dyeing material or functional film is strongly exhibited, the shielding effect at the wavelength is further enhanced, and the local maximum value is eliminated.

For example, in a case where the dyeing material for the lens substrate satisfies the above-described condition, the shielding effect is enhanced at the upper part and the lower part of the lens where the lens thickness increases as the light transmission length increases, and in particular, the shielding effect becomes remarkable at the above-described wavelength. As a result, while the risk of sunlight from the upper side and reflection from the ground is effectively prevented, the local maximum value is maintained at the lens center portion, and the lightness and the saturation are obtained.

In addition, the wavelength band in which the wavelength is convex downward and the wavelength band in which the wavelength is convex upward vary for each element, which leads to an advantage that a desired spectral transmittance distribution can be formed easily. In particular, it is possible to correct an error in transmittance in production to reduce a risk of giving a wearer a lens having a transmittance unintentionally exceeding a threshold.

<Specific Example of Setting Spectral Transmittance of Spectacle Lens>

The principle of setting the spectral transmittance of the spectacle lens and the specific means for achieving the principle have been described above. Hereinbelow, a specific example of the principle and the means will be described. The present invention is not limited to the following specific example.

First, a database for ACTI1 to 3 is prepared. A wearer adopting ACTI2 is assumed. In the following example, Formulae 3 and 4 described above are used.

As Case 1, an environment with a radiant intensity higher by 20% than a reference radiation intensity of sunlight is assumed as an environment of a region where a wearer J uses the spectacle lens.

As Case 2, it is assumed that a wearer K has already implanted a yellow transparent intraocular lens in the same environment as Case 1.

Fig. 4 is a plot in which a horizontal axis represents a wavelength (unit: nm) and a vertical axis represents "a relative value of user individual data with respect to a reference value" in Case 1, and as individual data, is a plot in which a relative illuminance in a user environment with respect to a reference solar irradiance is represented by a two-dot chain line and a relative transmittance of an intraocular lens implanted eye with respect to a spectral transmittance of a standard eye is represented by a one-dot chain line.

Fig. 5 is a plot in which a vertical axis represents a spectral transmittance (unit:%) and a horizontal axis represents a wavelength (unit: nm) in Case 1, where the dotted line indicates an upper limit of the spectral transmittance suitable for the wearer J under a reference condition (AM 1.5), the broken line indicates an upper limit of the spectral transmittance suitable for the wearer J in the region where the spectacle lens is used, and the solid line indicates a spectral transmittance of the spectacle lens.

Fig. 6 is a plot in which a vertical axis represents a spectral transmittance (unit:%) and a horizontal axis represents a wavelength (unit: nm) in Case 1, where the broken line indicates a spectral transmittance of the lens substrate, the dotted line indicates a spectral transmittance of the functional film, and the solid line indicates a spectral transmittance of the spectacle lens.

Fig. 7 is a plot in which a horizontal axis represents a wavelength (unit: nm) and a vertical axis represents "a relative value of user individual data with respect to a reference value" in Case 2, and as individual data, is a plot in which a relative illuminance in a user environment with respect to a reference solar irradiance is represented by a two-dot chain line and a relative transmittance of an intraocular lens implanted eye with respect to a spectral transmittance of a standard eye for the wearer K is represented by a one-dot chain line.

Fig. 8 is a plot in which a vertical axis represents a spectral transmittance (unit:%) and a horizontal axis represents a wavelength (unit: nm) in Case 2, where the dotted line indicates an upper limit of the spectral transmittance suitable for the wearer K under a reference condition (AM 1.5), the broken line indicates an upper limit of the spectral transmittance suitable for the wearer K in the region where the spectacle lens is used, and the solid line indicates a spectral transmittance of the spectacle lens.

Fig. 9 is a plot in which a vertical axis represents a spectral transmittance (unit:%) and a horizontal axis represents a wavelength (unit: nm) in Case 2, where the broken line indicates a spectral transmittance of the lens substrate, the dotted line indicates a spectral transmittance of the functional film, and the solid line indicates a spectral transmittance of the spectacle lens.

In this specific example, the lens substrate contains a colorant, and the functional film is dyed.

In this specific example, the spectacle lens has the following characteristics in both Cases 1 and 2.

"A spectacle lens in which

when a freely-selected numerical value of 360 or more and 450 or less is $\alpha$,

in a spectral transmittance curve in which the vertical axis is a spectral transmittance and the horizontal axis is a wavelength,

a value of a transmittance when the wavelength of light is $\alpha$ nm is 10% or less,

the spectral transmittance curve has a first local maximum value in a range in which the wavelength of light is $(\alpha+20)$ nm or more and less than $(\alpha+30)$ nm, and

the spectral transmittance curve has a first local minimum value in a range in which the wavelength of light is $(\alpha+30)$ nm or more and $(\alpha+40)$ nm or less."

The reason for having the above characteristics is to ensure a clear field of view for the wearer. For example, in the spectacle lens, the aim is to selectively increase the transmittance only at 445 nm, at which the spectral radiant intensity of a blue LED for a white light source has a peak. This makes it possible to transmit the blue color of the LED (440 to 450 nm) much but transmit the blue color of sunlight (400 to 480 m) less. This means that it is possible not only to make the field of view clear for the wearer but also to shield sunlight in a relatively wide range of wavelength. That is, it means that a clear field of view can be ensured while phototoxicity due to sunlight is reduced.

The spectacle lens having the characteristics described in the above paragraph can be an invention by itself in consideration of the above effects and the object for achieving the effects (ensuring a clear field of view while reducing phototoxicity due to sunlight).

Of course, this example is illustrative only, and the transmittance at a different wavelength may be selectively increased according to the environment or the purpose. For example, in view of the fact that the blue color of the organic EL has a longer wavelength, the transmittance at 460 nm may be improved. In addition to display applications, light at 470 to 490 nm around 480 nm may be transmitted for circadian rhythm (also referred to herein as a biological clock). Alternatively, the wavelength at which intrinsically photosensitive retinal ganglion cells (ipRGCs) related to the circadian rhythm have high sensitivity varies from individual to individual in a wide range of 440 to 530 nm, and thus may be set according to individual differences. If a useful wavelength that is not harmful to lens epithelial cells is found, light at the wavelength may be transmitted.

The spectacle lens of the present specific example may further include at least one (preferably all) of the following configurations. The following configurations are configurations in consideration of Cases 1 and **2.**

"The $\alpha$ is a freely-selected numerical value of 420 or more and 430 or less."

"The value of the transmittance that is the local maximum value 1 is 40% or more."

"The spectral transmittance curve has a second local maximum value in a range in which the wavelength of light is 470 nm (or 490 nm) or more and 530 nm or less, and the value of the transmittance that is the second local maximum value is 85% or more."

<Specific Example of Setting of Spectral Transmittance of Spectacle Lens When Spectacles are Made>

The spectacle lens is cut to fit into a frame. This work is also referred to as edging. Then, the edged spectacle lens is fitted into the frame to obtain spectacles.

The spectral transmittance of the spectacle lens may be set in consideration of the state in which the wearer wears the spectacles. Details will be described below.

As illustrated in Fig. 10, when an angle with respect to a direction of light vertically incident on the pupil (a horizontal direction in a case where the wearer turns the eye in the horizontal direction) is $\theta$, an incident radiation flux of light passing through the pupil is proportional to $\cos\theta$. That is, the fact that the light is less likely to enter the pupil as the light is inclined with respect to the pupil is expressed by an expression of being proportional to $\cos\theta$. When the integral value to $\theta = 90$ degrees is 1, the integral value of the incident radiation flux from an angle of 0 degrees to $\theta$ degrees is $(1 - (\cos2\theta)^2)$.

As illustrated in Fig. 11, the radius of the spectacle lens fitted into the spectacles in a planar view (such a spectacle lens is also referred to as a box) is H, and the corneal to vertex distance to the box is D. In this case, the relation with the integration range $\theta$ is $\tan\theta = H/D$, and $S = \pi H^2$ is established when the area of the spectacles is S. When the above-described relation is substituted into the integration, the integral value is $S/(S + \pi D^2)$. This is defined as a ratio R1 of light passing through the spectacle box.

A ratio R2 of light not passing through the spectacle box may be set to $(1 - R1)$. On the other hand, in practice, part of the light is shielded by the wearer's physical features such as the nose, cheekbones, and brow bones. When the shielding ratio is R3, the ratio R2 of light not passing through the spectacle box may be $(1 - R1 - R3)$.

R3 may be actually measured by each wearer, but a relatively typical value for R3 can be obtained on the basis of the sex and race. For example, a typical value for R3 for Japanese men is 0.1 (10%), and that for Western men is double the value.

It is desirable that the transmittance of the spectacle lens fitted in the spectacles is set so as to satisfy the following.

Solar irradiance $\times$ transmittance of eye $\times$ (R1 $\times$ transmittance of spectacle lens fitted in spectacles + 1 - R1 - R3) $\leq$ threshold considering phototoxicity (example: ACTI1 to 3)

where R1 = $S/(S + \pi D^2)$ is established, S is the area of the box, D is the corneal to vertex distance, and R3 is the above-described shielding ratio

A frame may be recommended according to the strength and color of the spectacles desired by the wearer using the relation described in this paragraph. For example, to a wearer who prefers a light color lens, a required box area may be calculated, and based on the calculated box area, an appropriate frame may be recommended.

The process from the database for the relationships 1 and 2 to the spectacle lens or the spectacles has been specifically described above. A system for achieving the above description is as follows.

<Spectacle Lens Supply System>

Fig. 12 is a schematic block diagram of a configuration of a spectacle lens supply system according to an aspect of the present invention.

Fig. 13 is a schematic procedure diagram of the spectacle lens supply system according to the aspect of the present invention.

A spectacle lens supply system according to an aspect of the present invention has the following configuration.

"A spectacle lens supply system comprising a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens"

According to the embodiment of the present invention, it is possible to supply a spectacle lens in which phototoxicity to ocular cells is prevented in advance according to a region where the spectacle lens is used. Preferably, it is possible to supply a spectacle lens in which the degree of morphological change and the degree of change in migration of ocular cells are set in advance.

(Database for Relationships 1 and 2)

The database according to an aspect of the present invention is so-called big data including the relationships between the morphological change and the change in migration of ocular cells, and the wavelength of light (that is, the relationships 1 and 2, examples: Fig. 1 (transmission spectrum) and Fig. 2 (spectral transmittance)) described in Non Patent Literature 1. Of course, big data for the relationship 3 may also be prepared.

(Specific Example and Preferred Example of Spectacle Lens Supply System)

Hereinbelow, a specific example and a preferable example of the spectacle lens supply system according to the aspect of the present invention will be described. The spectacle lens supply system according to the aspect of the present invention includes, as an example, the following configuration.

A spectacle store computer on the spectacle store side may have the following configuration.

- An input unit
- A display unit

A control computer on the control side may have the following configuration.

- A database recording unit for relationships between a morphological change, a change in migration, and a change in invasiveness of ocular cells, and a wavelength of light
- A spectral transmittance setting unit
- A role-playing content determination unit that lets a material A that reduces a transmittance in a predetermined wavelength range S and a material B that reduces a transmittance in another predetermined wavelength range T play roles to achieve a selected relationship
- A control computer unit

The control side may also serve as the production factory side of the spectacle lens. Hereinbelow, examples thereof will be described.

The input unit has a function of receiving attributes of a purchaser of spectacles (future spectacle lens wearer). The attributes include a region where the spectacle lens is to be used (in most cases, the address of the purchaser). The attributes also include the season of use and the application (used in snowy mountains, used in summer mountain climbing, used in town, etc.). The attributes further include the use time (length of outdoor use time after sunrise and before sunset, and time zone of outdoor work time in daytime). In the present specification, a "use environment (this may also be referred to as a living environment)" is used as an expression encompassing at least one of the region where the spectacle lens is to be used, the season of use, the application, and the use time. That is, the attributes may include the region where the spectacle lens is used and the use environment of the spectacle lens. In addition, if color discrimination is important depending on the presence or absence of color vision abnormality or the like, occupation, hobby, preference, or the like, such information can also be included in the attributes.

In addition, examples of the information regarding the attributes based on specific cases include the following. A patient undergoing ophthalmic surgery has an increased risk of phototoxicity. Therefore, the latest surgery date may be input as the information. Then, a safety margin for the transmittance may be ensured on the basis of the period between the surgery date and the day on which the spectral transmittance is set according to an aspect of the present invention.

The application may be automatically determined in association with the product number of the lens. For example, in the case of an intermediate-near lens, it is assumed that the lens is less used outdoors during the day.

The "attributes" is only required to include at least one of the various types of information listed in this paragraph, and the various types of information may be appropriately combined according to the situation. The attributes preferably include at least the use environment.

In any case, the spectral transmittance setting unit preferably sets the spectral transmittance of the spectacle lens from the attributes of the wearer of the spectacle lens as well as the solar radiant intensity in the region where the spectacle lens is used and the spectral transmittance of the eye of the wearer of the spectacle lens.

The content input through the input unit (S1 in Fig. 13) is transmitted to the control computer on the control side. On the control side, on the basis of the content, while the database recording unit is referred to (S2), the spectral transmittance is set by the spectral transmittance setting unit (S3). Here, there is a reason why the expression "set" is used.

Determining one optimum spectral transmittance for the purchaser while referring to the database recording unit on the basis of the content input through the input unit is also included in "set" of the present specification. However, in that case, the color of the spectacle lens having the determined spectral transmittance is naturally one type. Then, when the spectacle lens produced (dyed) in the factory is sent to the spectacle store, and the purchaser looks at the spectacle lens in the spectacle store, the purchaser may not like the color of the spectacle lens.

Therefore, in the spectral transmittance setting unit of the control computer, a plurality of spectral transmittances in which the colors of the spectacle lenses are different from each other may be set as options within a range satisfying the degree 1 of the morphological change of ocular cells and the degree 2 of the change in migration of ocular cells desired by the purchaser, and this is preferable. In order to encompass this case, in the present specification, the expression, the spectral transmittance is "set", is used. In the aspect described in this paragraph, in the spectacle store, the plurality of the spectacle lenses having different colors are displayed on the display unit (S4). The purchaser selects one of them (S5). The input of the selection result and the transmission to the factory side via a network X may be performed using the input unit.

According to the configuration described in the above paragraph, it is possible to prevent a situation where the purchaser does not like the color of the spectacle lens when the purchaser looks at the spectacle lens at the spectacle store, and to improve customer satisfaction. In consideration of this effect and the object for achieving this effect, the following configuration can be an invention by itself.

"A spectacle lens supply system and a related technology thereof including a display unit that displays a color of a spectacle lens corresponding to each of a plurality of spectral transmittances set from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens
(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens"

In addition to this configuration, the spectacle lens supply system preferably includes the input unit. With this configuration, the spectacle lens supply system does not need to include the spectral transmittance setting unit, and data of the color of the spectacle lens corresponding to each of the plurality of spectral transmittances of the spectacle lens set by the spectral transmittance setting unit is only required to be provided to the spectacle lens supply system.

The role-playing content determination unit of the control computer may let the material A (for example, the lens substrate) that reduces the transmittance in the predetermined wavelength range S and the material B (for example, other than the lens substrate, that is, the functional film) that reduces the transmittance in the other predetermined wavelength range T play roles to achieve the selected relationship (S6).

As described in the above paragraph, even in a case where the spectral transmittance setting unit of the control computer sets the plurality of spectral transmittances while utilizing the function of the role-playing content determination unit, it is preferable to display the spectacle lenses having different colors corresponding to the respective spectral transmittances on the display unit of the spectacle store computer (S4). Then, the purchaser preferably selects a spectacle lens of a favorite color in advance and inputs the selection content using the input unit of the spectacle store computer (S5).

Note that the display unit may display simulation images of an appearance as viewed from a third party, a field of view through the lens as viewed from a wearer, or the like. A drawing function and an angle change interface may be provided to display the appearance from a freely-selected angle. The field of view may be displayed in consideration of a change in color vision at the time of wearing an intraocular lens and color vision abnormality of the wearer. By adopting this configuration, in a case where a third party other than a person with color vision abnormality (for example, a person with normal color vision who is an assistant for a person with color vision abnormality) attends on the purchase of the spectacle lens according to an aspect of the present invention, the third party can grasp a change in color vision, which is useful for assistance.

A tablet terminal in which the input unit and the display unit described below are integrated may be used as the spectacle store computer.

The database recording unit may or does not need to be included in the configuration of the mold management system. For example, the database recording unit may be provided in the control computer, the factory computer, or a server on a network.

The control computer unit has a function as a computer device that performs specified information processing in accordance with a predetermined program, and is specifically configured by a combination of a central processing unit (CPU), a hard disk drive (HDD), a read only memory (ROM), a random access memory (RAM), an external interface (I/F), and the like.

According to the role-playing content determination unit, it is possible to supply the spectacle lens in which phototoxicity to ocular cells is prevented in advance while coping with the stock of the lens substrate or the stock of the material for the functional film. Preferably, it is possible to supply a spectacle lens in which the degree of morphological change and the degree of change in migration of ocular cells are set in advance. In consideration of this effect and the object for achieving this effect, the following configuration can be an invention by itself.

"A spectacle lens supply system and a related technology thereof including

a spectral transmittance setting unit that sets a spectral transmittance of a spectacle lens on a basis of a relationship selected from at least one of relationships listed below

(1) A relationship 1 between a wavelength of light and an irradiance for determining whether or not to cause a morphological change of ocular cells according to a degree 1 required for a morphological change of ocular cells of a wearer of a spectacle lens
(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens, and

a role-playing content determination unit that lets a material A that reduces a transmittance in a predetermined wavelength range S and a material B that reduces a transmittance in another predetermined wavelength range T play roles to achieve the relationship selected."

With this configuration, the object described in this paragraph can be achieved from the contents described in Non Patent Literature 1 without considering the solar radiant intensity in the region where the spectacle lens is used and the spectral transmittance of the eye of the wearer of the spectacle lens.

The spectacle lens is produced according to the content selected by the purchaser and the role-played content (S7). As a specific work content of the production of the spectacle lens, known work may be employed. As a method for achieving the selected relationship, as described in <Principle of Setting Spectral Transmittance of Spectacle Lens> and <Specific Configuration of Spectacle Lens for Achieving Principle> above, a colorant may be contained in the material for the lens substrate, or the lens substrate and/or the functional film may be dyed. The spectacle lens thus produced is transported to the spectacle shop and delivered to the purchaser at the spectacle shop (S8).

<Spectacle Lens Design Method, Spectacle Lens Production Method, and Program for Spectacle Lens Supply System>

The technical idea of the spectacle lens supply system according to the aspect of the present invention is also applicable to a spectacle lens design method, a spectacle lens production method, and a program for a spectacle lens supply system. A specific configuration of each invention is as described below.

"A spectacle lens design method including a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens"

"A spectacle lens production method including a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens, and

a producing process of producing the spectacle lens so as to have the transmittance set in the spectral transmittance setting process."

"A program for a spectacle lens supply system causing a computer to function as a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below.

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens"

<Others>

A technical scope of the present invention is not limited to the aforementioned embodiments but may include various modifications or improvements as long as the specific effects obtained by the elements of the present invention or a combination thereof can be derived.

The ocular cells may be lens epithelial cells, retinal pigment epithelial cells, corneal endothelial cells, corneal epithelial stem cells, or subconjunctival fibroblasts. Among them, the lens epithelial cells have high phototoxicity sensitivity, and as a result, the effect of the present invention is particularly remarkably obtained.

On the premise of the contents given in <Specific Example of Setting Spectral Transmittance of Spectacle Lens> above, the spectacle lens supply system according to the aspect of the present invention may be expressed as follows. The contents described in this paragraph can be an invention by itself as an invention having the effects described in <Specific Configuration of Spectacle Lens for Achieving Principle> and the object for bringing about the effects.

"A spectacle lens supply system including a spectral transmittance setting unit that, on a basis of a relationship selected from at least one of relationships listed below, sets a spectral transmittance of a spectacle lens that is a spectral transmittance of a spectacle lens set from a solar radiant intensity in a region where the spectacle lens is used and a spectral transmittance of an eye of a wearer of the spectacle lens, in which a shape of a spectral transmittance curve of the spectral transmittance that has a local maximum value in a range of visible light when a vertical axis represents a spectral transmittance and a horizontal axis represents a wavelength is convex downward at a wavelength at which a spectral transmittance curve of at least any one of members constituting the spectacle lens has the local maximum value. (1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens
(3) A relationship 3 between a wavelength of light and an irradiance for determining whether or not to cause a change in invasiveness of ocular cells according to a degree 3 required for invasiveness of ocular cells of a wearer of a spectacle lens"

## Claims

1. A spectacle lens supply system comprising a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below:

   (1) A relationship 1 between a wavelength of light and an irradiance for determining whether or not to cause a morphological change of ocular cells according to a degree 1 required for a morphological change of ocular cells of a wearer of a spectacle lens
   (2) A relationship 2 between a wavelength of light and an irradiance for determining whether or not to cause a change in migration of ocular cells according to a degree 2 required for migration of ocular cells of a wearer of a spectacle lens
   (3) A relationship 3 between a wavelength of light and an irradiance for determining whether or not to cause a change in invasiveness of ocular cells according to a degree 3 required for invasiveness of ocular cells of a wearer of a spectacle lens.

2. The spectacle lens supply system according to claim **1,** comprising a display unit that displays a color of a spectacle lens corresponding to each of a plurality of spectral transmittances set from the solar radiant intensity in the region where the spectacle lens is used and the spectral transmittance of the eye of the wearer of the spectacle lens on a basis of the relationship selected from at least one of the relationships (1) to (3).

3. The spectacle lens supply system according to claim 2, comprising an input unit that has a function of receiving an attribute of the wearer of the spectacle lens and lets the wearer of the spectacle lens select a spectacle lens of a favorite color in advance and input a selection content thereof.

4. The spectacle lens supply system according to claim **1,** wherein the spectral transmittance of the spectacle lens set by the spectral transmittance setting unit satisfies the following formula:

   solar irradiance $\times$ transmittance of eye $\times$ (R1 $\times$ transmittance of spectacle lens fitted in spectacles + 1 - R1 - R3) $\leq$ threshold considering phototoxicity
   where R1 = $S/(S + \pi D^2)$ is established, S is an area of a box, D is a corneal to vertex distance, and R3 is a shielding ratio of light shielded by a physical feature of the wearer.

5. The spectacle lens supply system according to claim 1, comprising a role-playing content determination unit that lets a material A that reduces a transmittance in a predetermined wavelength range S and a material B that reduces a transmittance in another predetermined wavelength range T play roles to achieve the relationship selected.

6. The spectacle lens supply system according to claim 1, wherein, on a basis of the relationship selected, the spectral transmittance setting unit sets the spectral transmittance of the spectacle lens that is a spectral transmittance of the spectacle lens set from the solar radiant intensity in the region where the spectacle lens is used and the spectral transmittance of the eye of the wearer of the spectacle lens, and wherein a shape of a spectral transmittance curve of the spectral transmittance that has a local maximum value in a range of visible light when a vertical axis represents a spectral transmittance and a horizontal axis represents a wavelength is convex downward at a wavelength at which a spectral transmittance curve of at least any one of members constituting the spectacle lens has the local maximum value.

7. The spectacle lens supply system according to claim 1, wherein the spectral transmittance setting unit sets the spectral transmittance of the spectacle lens from an attribute of the wearer of the spectacle lens as well as the solar radiant intensity in the region where the spectacle lens is used and the spectral transmittance of the eye of the wearer of the spectacle lens.

8. The spectacle lens supply system according to any one of claims 1 to 7, wherein the spectral transmittance setting unit sets the spectral transmittance of the spectacle lens on a basis of the relationships 1 to 3.

9. A spectacle lens supply method comprising a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below:

    (1) A relationship 1 between a wavelength of light and an irradiance for determining whether or not to cause a morphological change of ocular cells according to a degree 1 required for a morphological change of ocular cells of a wearer of a spectacle lens
    (2) A relationship 2 between a wavelength of light and an irradiance for determining whether or not to cause a change in migration of ocular cells according to a degree 2 required for migration of ocular cells of a wearer of a spectacle lens
    (3) A relationship 3 between a wavelength of light and an irradiance for determining whether or not to cause a change in invasiveness of ocular cells according to a degree 3 required for invasiveness of ocular cells of a wearer of a spectacle lens.

10. A spectacle lens design method comprising a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below:

    (1) A relationship 1 between a wavelength of light and an irradiance for determining whether or not to cause a morphological change of ocular cells according to a degree 1 required for a morphological change of ocular cells of a wearer of a spectacle lens
    (2) A relationship 2 between a wavelength of light and an irradiance for determining whether or not to cause a change in migration of ocular cells according to a degree 2 required for migration of ocular cells of a wearer of a spectacle lens
    (3) A relationship 3 between a wavelength of light and an irradiance for determining whether or not to cause a change in invasiveness of ocular cells according to a degree 3 required for invasiveness of ocular cells of a wearer of a spectacle lens.

11. A spectacle lens production method comprising:

    a spectral transmittance setting process of setting a spectral transmittance of a spectacle lens from a solar radiant intensity in a region where the spectacle lens is used and a spectral transmittance of an eye of a wearer of the spectacle lens on a basis of a relationship selected from at least one of relationships listed below

    (1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens; and

a producing process of producing the spectacle lens so as to have the transmittance set in the spectral transmittance setting process.

12. A program for a spectacle lens supply system causing a computer to function as a spectral transmittance setting unit that sets a spectral transmittance of a spectacle lens from a solar radiant intensity in a region where the spectacle lens is used and a spectral transmittance of an eye of a wearer of the spectacle lens on a basis of a relationship selected from at least one of relationships listed below:

(1) A relationship 1 between a wavelength of light and an irradiance for determining whether or not to cause a morphological change of ocular cells according to a degree 1 required for a morphological change of ocular cells of a wearer of a spectacle lens

(2) A relationship 2 between a wavelength of light and an irradiance for determining whether or not to cause a change in migration of ocular cells according to a degree 2 required for migration of ocular cells of a wearer of a spectacle lens

(3) A relationship 3 between a wavelength of light and an irradiance for determining whether or not to cause a change in invasiveness of ocular cells according to a degree 3 required for invasiveness of ocular cells of a wearer of a spectacle lens.

[Fig. 1]

[Fig. 2]

[Fig. 3A]

[Fig. 3B]

[Fig. 4]

[Fig. 5]

[Fig. 6]

[Fig. 7]

[Fig. 8]

[Fig. 9]

[Fig. 10]

[Fig. 11]

[Fig. 12]

CONTROL COMPUTER
AND FACTORY COMPUTER

SPECTACLE STORE
COMPUTER

| DATABASE RECORDING UNIT | 201 |

| SPECTRAL TRANSMITTANCE SETTING UNIT | 202 |

| ROLE-PLAYING CONTENT DETERMINATION UNIT | 203 |

| CONTROL COMPUTER UNIT | 204 |

200

| INPUT UNIT | 101 |

| DISPLAY UNIT | 102 |

100

X

[Fig. 13]

CONTROLLER AND FACTORY | SPECTACLE STORE

S2 REFER TO DATABASE ← S1 INPUT ATTRIBUTES OF CUSTOMER

B

S3 SET SPECTRAL TRANSMITTANCE OF SPECTACLE LENS → S4 DISPLAY SPECTACLE LENSES HAVING DIFFERENT COLORS

S6 DETERMINE ROLE-PLAY FOR SPECTRAL TRANSMITTANCE ← S5 INPUT SELECTION RESULT

S7 PRODUCE SPECTACLE LENS → S8 DELIVER SPECTACLE LENS TO PURCHASER

## INTERNATIONAL SEARCH REPORT

| International application No. |
| --- |
| **PCT/JP2024/011883** |

| A. | CLASSIFICATION OF SUBJECT MATTER |
| --- | --- |

*G02C 13/00*(2006.01)i; *G02C 7/02*(2006.01)i; *G02C 7/10*(2006.01)i
FI:   G02C13/00; G02C7/02; G02C7/10

According to International Patent Classification (IPC) or to both national classification and IPC

| B. | FIELDS SEARCHED |
| --- | --- |

Minimum documentation searched (classification system followed by classification symbols)

G02C13/00; G02C7/02; G02C7/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2019-529996 A (ESSILOR INTERNATIONAL) 17 October 2019 (2019-10-17) <br> entire text, all drawings | 1-12 |
| A | JP 2019-507388 A (ESSILOR INTERNATIONAL) 14 March 2019 (2019-03-14) <br> entire text, all drawings | 1-12 |
| A | US 2015/0323812 A1 (HIGH PERFORMANCE OPTICS, INC.) 12 November 2015 (2015-11-12) <br> entire text, all drawings | 1-12 |
| P, A | WO 2023/189098 A1 (TOKYO METROPOLITAN PUBLIC UNIVERSITY CORPORATION) 05 October 2023 (2023-10-05) <br> entire text, all drawings | 1-12 |
| P, A | WO 2024/024455 A1 (TOKYO METROPOLITAN PUBLIC UNIVERSITY CORPORATION) 01 February 2024 (2024-02-01) <br> entire text, all drawings | 1-12 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 April 2024** | **14 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

EP 4 692 913 A1

| INTERNATIONAL SEARCH REPORT | | | International application No. |
|---|---|---|---|
| Information on patent family members | | | PCT/JP2024/011883 |

| Patent document cited in search report | | | Publication date (day/month/year) | Patent family member(s) | | | Publication date (day/month/year) |
|---|---|---|---|---|---|---|---|
| JP | 2019-529996 | A | 17 October 2019 | US | 2019/0346694 | A1 | |
| | | | | entire text, all drawings | | | |
| | | | | WO | 2018/054988 | A1 | |
| | | | | EP | 3296799 | A1 | |
| | | | | CN | 109716217 | A | |
| JP | 2019-507388 | A | 14 March 2019 | US | 2019/0094135 | A1 | |
| | | | | entire text, all drawings | | | |
| | | | | WO | 2017/149140 | A1 | |
| | | | | EP | 3214483 | A1 | |
| | | | | CA | 3013688 | A1 | |
| | | | | CN | 108780233 | A | |
| | | | | KR | 10-2018-0118625 | A | |
| US | 2015/0323812 | A1 | 12 November 2015 | (Family: none) | | | |
| WO | 2023/189098 | A1 | 05 October 2023 | (Family: none) | | | |
| WO | 2024/024455 | A1 | 01 February 2024 | (Family: none) | | | |

Form PCT/ISA/210 (patent family annex) (July 2022)